# EUROPÄISCHE PATENTSCHRIFT

(11) **EP 1 470 749 B1**
(45) Veröffentlichungstag und Bekanntmachung des Hinweises auf die Patenterteilung: **23.06.2010**
(21) Anmeldenummer: 04008211.7
(22) Anmeldetag: 05.04.2004
(51) Int. Cl.: A01F 12/00, A01D 41/12

(54) **Dresch-/Separator-System**
Thresher-separator system
Système batteur-séparateur

(30) Priorität: 22.04.2003 DE 10318280
(43) Veröffentlichungstag der Anmeldung: 27.10.2004
(73) Patentinhaber: CLAAS Selbstfahrende Erntemaschinen GmbH, 33428 Harsewinkel (DE)
(72) Erfinder: Speckamp, Dirk, 59073 Hamm (DE)

(56) Entgegenhaltungen:
- EP-A- 0 092 599
- EP-A- 1 321 023
- CA-A- 2 130 724
- DE-B- 1 004 843

## Beschreibung

Die Erfindung betrifft ein Dresch-/Separator-System mit einer Drescheinrichtung zum Dreschen eines aus zu entkörnendem Getreide bestehenden Gutstroms, mit einer der Drescheinrichtung nachgeordneten Trenneinrichtung zum Separieren der noch im gedroschenen Gutstrom enthaltenen Körner von den weiteren Bestandteilen des gedroschenen Gutstroms und mit einer Wendetrommel, welche den von der Drescheinrichtung kommenden Gutstrom auf die Trenneinrichtung umlenkt. Darüber hinaus betrifft die Erfindung einen Mähdrescher mit einem solchen Dresch-/Separator-System sowie ein entsprechendes Verfahren zur Steuerung eines Dresch-/Separator-Systems, in welchem ein aus zu entkörnendem Getreide bestehender Gutstrom zunächst in einer Drescheinrichtung gedroschen wird und dann mittels einer Wendetrommel auf eine der Drescheinrichtung nachgeordnete Trenneinrichtung umgelenkt wird.

Dresch-/Separator-Systeme der eingangs genannten Art werden heutzutage in vielen Mähdreschern eingesetzt. Ein typisches Beispiel für ein solches Dresch-/Separator-System sind die sogenannten Querfluss- bzw. Tangentialfluss-Systeme, bei denen die Drescheinrichtung eine quer zur Längsachse des Mähdreschers und somit quer zur Gutstromrichtung angeordnete Dreschtrommel aufweist, welche in einem darunter angeordneten Dreschkorb rotiert. Das Erntegut wird von der rotierenden Dreschtrommel entlang des Dreschkorbs durch einen zwischen Dreschtrommel und Dreschkorb verbliebenen Dreschspalt hindurchgeführt. Dabei werden am Dreschkorb Körner und Beimengungen wie Halmteile und Spreuteile abgeschieden. Eine solche Drescheinrichtung wird beispielsweise in der EP 0 092 599 B1 beschrieben.

Der aus der Drescheinrichtung kommende Gutstrom besteht im Wesentlichen aus einem Gemisch aus Stroh, Kurzstroh, Spreu und Körnern. Daher muss der Gutstrom hinter der Drescheinrichtung auf eine Trenneinrichtung geführt werden, welche den Gutstrom in einen ersten Gutstrom, der im Wesentlichen aus Körnern sowie Kurzstroh und Spreu besteht, und einen weiteren Gutstrom, der im Wesentlichen aus Stroh und einem kleinen Anteil Verlustkörnern besteht, trennt. Der erste Gutstrom wird anschließend einer Reinigung zugeführt, um die Körner von dem Kurzstroh und der Spreu zu separieren.

Die Übergabe des Gutstroms von dem in Gutstromrichtung rückwärtigen Ende - d. h. dem Gutstromausgang - der Drescheinrichtung zur Trenneinrichtung erfolgt bei dem eingangs genannten Dresch-/Separator-System mit Hilfe einer Wendetrommel. Diese Wendetrommel ist in einem bestimmten Abstand hinter der Dreschtrommel angeordnet und rotiert in gleicher Rotationsrichtung wie die Dreschtrommel um eine Achse, die parallel zur Achse der Dreschtrommel verläuft. Der am Gutstromausgang der Drescheinrichtung herausgeschleuderte Gutstrom trifft auf diese Wendetrommel und wird von dieser in Richtung der Trenneinrichtung umgelenkt. Bei der Trenneinrichtung handelt es sich in der Regel um einen Schüttler, beispielsweise einen Hordenschüttler mit mehreren Schüttlerstufen.

Der Wirkungsgrad der Trenneinrichtung, d. h. die Effizienz der Trennung der Körner aus dem gedroschenen Gutstrom, ist umso erfolgreicher, je früher der Gutstrom auf der Trenneinrichtung auftrifft. Der Auftreffpunkt des Gutstroms wird maßgeblich von den Eigenschaften des Guts, d. h. beispielsweise von der Fruchtart und der Feuchtigkeit, sowie dem sich an der Wendetrommel einstellenden Reflektionswinkel bestimmt. Zudem besteht der Gutstrom einerseits aus trägerem Lang- und Kurzstroh und andererseits aus sich dynamisch bewegenden Körnern, die in Abhängigkeit vom Reflexionswinkel und ihrer kinetischen Energie weit in den hinteren Bereich der Trenneinrichtung transportiert werden können, bevor sie überhaupt auf der Trenneinrichtung auftreffen. Daher ist nicht immer gewährleistet, dass der Gutstrom die Trenneinrichtung am optimalen Auftreffpunkt erreicht, wobei sich bei Änderungen der Erntebedingungen, z. B. bei Änderungen der Temperatur oder Feuchtigkeit, der Auftreffpunkt auch während einer Erntefahrt verschieben kann.

Es ist Aufgabe der vorliegenden Erfindung, ein Dresch-/Separator-System der eingangs genannten Art bzw. ein Verfahren zur Steuerung eines solchen Dresch-/Separator-Systems anzugeben, welches es ermöglicht, den Auftreffpunkt des Gutstroms auf der Trenneinrichtung und somit die Separationswirkung der Trenneinrichtung zu optimieren.

Diese Aufgabe wird durch ein Dresch-/Separator-System gemäß Patentanspruch 1 bzw. durch ein Verfahren gemäß Patentanspruch 12 gelöst.

Erfindungsgemäß weist das Dresch-/Separator-System eine Sensoreinrichtung auf, um den Auftreffpunkt des Gutstroms auf der Trenneinrichtung zu detektieren. Außerdem besitzt das Dresch-/Separator-System eine Steuereinrichtung, um den Auftreffpunkt des Gutstroms auf der Trenneinrichtung zu steuern. Die Steuerung erfolgt dabei erfindungsgemäß so, dass mittels der Sensoreinrichtung der Auftreffpunkt des Gutstroms auf der Trenneinrichtung detektiert und in Abhängigkeit von dem von der Sensoreinrichtung erzeugten Signal mittels der Steuereinrichtung entsprechend verstellt wird. Auf diese Weise kann der Auftreffpunkt auf der Trenneinrichtung für jede Fruchtart und bei den verschiedensten Erntebedingungen optimal eingestellt werden, um so eine möglichst effiziente Kornabscheidung in der Trenneinrichtung zu erreichen. In der Regel wird hierzu ein möglichst nah am frontseitigen Ende der Trenneinrichtung liegender Auftreffpunkt gewählt.

Die abhängigen Ansprüche enthalten jeweils besonders vorteilhafte Ausgestaltungen und Weiterbildungen der Erfindung.

Zur Verstellung des Auftreffpunkts des Gutstroms auf der Trenneinrichtung bestehen verschiedene Eingriffsmöglichkeiten in das Dresch-/Separator-System, wobei insbesondere eine Ansteuerung der Drescheinrichtung und/oder der Wendetrommel relativ einfach realisierbar ist.

Bei einem besonders bevorzugten Ausführungsbeispiel eines Dresch-/Separator-Systems mit einer Tangentialfluss-Drescheinrichtung, d. h. mit einer quer zur Gutstromrichtung angeordneten Dreschtrommel und einem darunter passend angeordneten Dreschkorb, weist der Dreschkorb am Gutstromausgang ein beweglich gelagertes Dreschkorbsegment auf. Die Steuereinrichtung weist dabei eine mit dem beweglichen Dreschkorbsegment gekoppelte Dreschkorbsegment-Stelleinrichtung auf. Durch Verstellung der Position des beweglichen Dreschkorbsegments lässt sich direkt der Abgabewinkel des Gutstroms von der Drescheinrichtung an die Wendetrommel steuern. Mit der Veränderung des Abgabewinkels ändert sich zwangsläufig auch der Reflextionswinkel von der Wendetrommel auf die Trenneinrichtung und somit der Auftreffpunkt des Gutstroms auf der Trenneinrichtung. Ein solcher Aufbau der Drescheinrichtung und der Steuereinrichtung ist besonders einfach und kostengünstig realisierbar.

Bei einem alternativen Ausführungsbeispiel ist die Wendetrommel auf einer Rotationsachse gelagert, die in ihrer Position verstellbar ist. Die Steuereinrichtung weist dabei eine geeignete Wendetrommel-Stelleinrichtung auf, mit der die Position der Wendetrommel-Rotationsachse automatisch verstellt werden kann. Durch die Veränderung der Position der Wendetrommel bezüglich des Gutstromausgangs der Drescheinrichtung wird der Auftreffwinkel des Gutstroms auf der Wendetrommel und somit auch der Reflexionswinkel des Gutstroms von der Wendetrommel auf die Trenneinrichtung variiert. Vorzugsweise ist dabei die Wendetrommel-Rotationsachse auf einer Teilkreisbahn in einem festen Abstand um die parallel zur Wendetrommel-Rotationsachse liegende Dreschtrommelachse verstellbar gelagert. Das heißt, bei einer Verstellung der Wendetrommel bleibt der Achsabstand zwischen Wendetrommel und Dreschtrommel immer gleich.

Bei einem weiteren alternativen Ausführungsbeispiel ist die Steuereinrichtung so mit einem Antrieb der Wendetrommel verbunden, dass sie die Rotationsgeschwindigkeit der Wendetrommel steuern kann. Mit der Rotationsgeschwindigkeit der Wendetrommel wird ebenfalls der Reflexionswinkel des Gutstroms auf die Trenneinrichtung und somit der Auftreffpunkt auf der Trenneinrichtung verstellt. Auch dieses Ausführungsbeispiel ist relativ kostengünstig realisierbar. Es ist lediglich erforderlich, dass anstelle der derzeit üblichen Kopplung des Antriebs der Dreschtrommel und des Antriebs der Wendetrommel die Wendetrommel mit einem separaten Antriebsaggregat angetrieben wird. Alternativ kann auch wie bisher ein gemeinsamer Antrieb für die Dreschtrommel und die Wendetrommel verwendet werden, wobei dieser Antrieb dann ein Getriebe umfassen sollte, mit dem die Rotationsgeschwindigkeit der Wendetrommel unabhängig von der Rotationsgeschwindigkeit der Dreschtrommel variiert werden kann. In diesem Fall wird entsprechend das Getriebe des Antriebs angesteuert, um die Rotationsgeschwindigkeit der Wendetrommel unabhängig von der Dreschtrommelgeschwindigkeit zu variieren.

Des Weiteren können in einem erfindungsgemäßen Dresch-/Separator-System auch Kombinationen der verschiedenen Alternativen realisiert werden, so dass wahlweise durch Einstellung eines beweglichen Dreschkorbsegments, durch Verstellung der Lage der Wendetrommel und/oder durch Variation der Rotationsgeschwindigkeit der Wendetrommel bzw. durch eine für das jeweilige Gut optimale Kombination aller Parameter der Auftreffpunkt des Gutstroms auf der Trenneinrichtung eingestellt werden kann.

Für den Aufbau der Sensoreinrichtung gibt es ebenfalls verschiedene Möglichkeiten.

So kann die Sensoreinrichtung zum einen so aufgebaut sein, dass sie genau ein Signal generiert, welches von der Dichte eines an einem ganz bestimmten Auftreffpunkt auftretenden Gutstroms abhängt. In diesem Fall wird eine nur recht einfache Sensoreinrichtung benötigt, welche im Prinzip genau einen Auftreffpunkt - den im Vorhinein bestimmten optimalen Auftreffpunkt auf der Trenneinrichtung, vorzugsweise direkt an oder in einem kurzen Abstand hinter dem frontseitigen Ende der Trenneinrichtung - beobachtet. Die Einstellung des Auftreffpunkts auf der Trenneinrichtung kann in diesem Fall beispielsweise derart erfolgen, dass der Auftreffpunkt solange variiert wird, bis das detektierte Signal einem gewünschten Wert entspricht, d. h. je nach Art des Detektors beispielsweise einen Minimal- oder Maximalwert oder einen bestimmten Prozentsatz des Minimal- oder Maximalwerts erreicht etc. Eine solche Sensoreinrichtung ist besonders einfach und kostengünstig.

Alternativ kann die Sensoreinrichtung auch einen in Gutstromrichtung breiten Messbereich aufweisen und so aufgebaut sein, dass der Auftreffpunkt innerhalb des Messbereichs lokalisierbar ist. In diesem Fall kann ein "Soll-Auftreffpunkt" an einem beliebigen Ort innerhalb des breiten Messbereichs vorgegeben werden. Dadurch kann der Soll-Auftreffpunkt innerhalb des Messbereichs sofern erforderlich jederzeit an das jeweilige Erntegut bzw. die Erntebedingungen angepasst werden. Auch hierbei ist die Sensoreinrichtung vorzugsweise so angeordnet, dass der Messbereich am oder in einem kurzen Abstand vom vorderen Ende der Trenneinrichtung liegt. Ein weiterer Vorteil einer solchen Sensoreinrichtung besteht darin, dass jederzeit der aktuelle Ist-Auftreffpunkt bestimmt werden kann und der Abstand zum gewünschten Soll-Auftreffpunkt und somit auch die Einstellparameter für die Ansteuerung der Drescheinrichtung und/oder der Wendetrommel einfacher festgelegt werden können.

Die Sensoreinrichtung kann je nach Anforderungen aus verschiedensten Sensoren aufgebaut sein.

Bei einem bevorzugten Ausführungsbeispiel weist die Sensoreinrichtung einen akustischen Sensor auf. Dieser ist vorzugsweise unterhalb der Trenneinrichtung angeordnet und registriert die in der Trenneinrichtung oberhalb des Sensors separierten Körner. Hierzu wird besonders bevorzugt ein Körperschallsensor verwendet, auf den die Körner auftreffen und ein entsprechendes Signal erzeugen.

Um mit einem solchen Sensor eine Sensoreinrichtung mit breitem Messbereich aufzubauen, müssen mehrere Sensoren in Gutstromrichtung hintereinander verwendet werden.

Alternativ kann die Sensoreinrichtung beispielsweise auch mittels optischer Sensoren aufgebaut werden, beispielsweise mit einer Lichtschranke bzw. einer Lichtschrankenzeile oder einem Lichtschrankenarray. Ebenso kann auch eine Kamera mit einem geeigneten Bildauswertesystem genutzt werden.

Die Steuerung in Abhängigkeit von den Sensorsignalen kann entweder manuell durch einen Bediener oder vollautomatisch erfolgen. Im ersten Fall wird beispielsweise dem Fahrer eines Mähdreschers das Sensorsignal in geeigneter Form angezeigt, z. B. akustisch und/oder optisch auf einem Display bzw. mit Hilfe eines Zeigers. Der Fahrer bedient dann über eine Benutzerschnittstelle die Steuereinrichtung, um den Auftreffpunkt optimal einzustellen, wobei er die Einstellung mit Hilfe des angezeigten Sensorsignals überprüfen kann. Im zweiten Fall erfolgt die Einstellung des Auftreffpunkts auf der Trenneinrichtung mit Hilfe des Sensorsignals vollautomatisch anhand von bereits im System vorgegebenen oder vorab vom Fahrer definierten Sollwerten. Die Sollwerte können dabei beispielsweise wiederum die Parameter der zu erntenden Fruchtart sowie die Erntebedingungen wie Feuchtigkeit des Ernteguts, Temperatur etc. berücksichtigen.

Die Erfindung wird im Folgenden unter Hinweis auf die beigefügten Figuren anhand von Ausführungsbeispielen näher erläutert. Dabei sind in den verschiedenen Figuren gleiche Bauteile mit denselben Bezugsziffern bezeichnet. Es zeigen:
Figur 1 einen schematischen Querschnitt durch einen Mähdrescher mit einem erfindungsgemäßen Dresch-/Separator-System,
Figur 2 eine vergrößerte Darstellung des wesentlichen Teils der Dresch-/Separator-Einrichtung gemäß Figur 1,
Figur 3 eine schematische Darstellung zur Lokalisierung des Auftreffpunkts mittels einer Sensoreinrichtung mit breiterem Messbereich,
Figur 4 eine schematische Darstellung zur Lokalisierung des Auftreffpunkts mittels einer Sensoreinrichtung mit schmalem Messbereich.

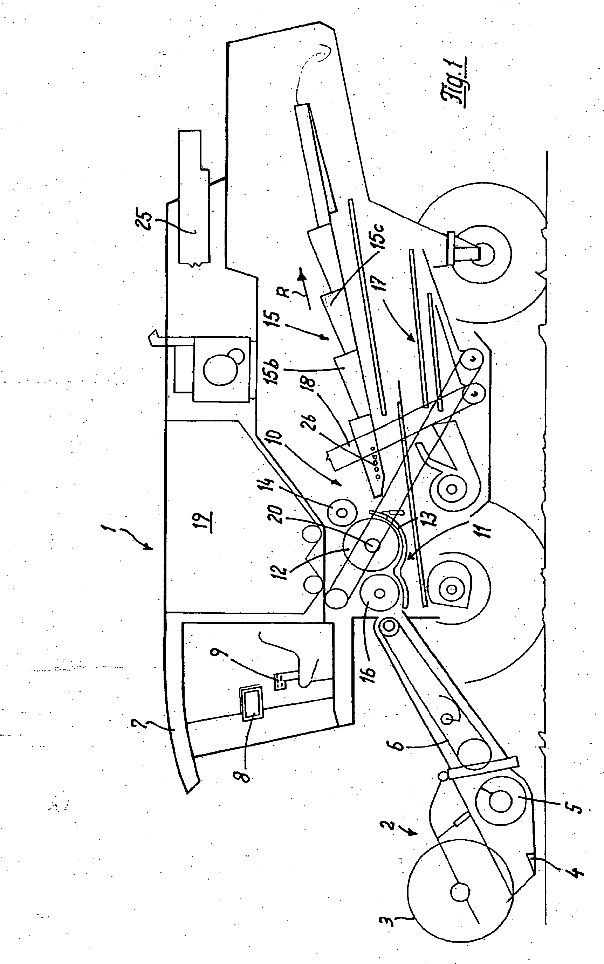

Bei dem in Figur 1 gezeigten Ausführungsbeispiel der Erfindung handelt es sich um ein in einem selbstfahrenden Mähdrescher 1 angeordnetes Dresch-/Separator-System 10 mit einer sogenannten Tangentialfluss- oder auch Querfluss-Drescheinrichtung 11 und einem dahinter angeordneten Schüttler 15 als Trenneinrichtung. Hierbei handelt es sich um einen typischen Hordenschüttter 15 mit mehreren Schüttlerstufen 15a, 15b, 15c.

Die Arbeitsweise eines solchen selbstfahrenden Mähdreschers 1 ist wie folgt:

Das Erntegut wird zunächst mittels einer Haspel 3 des Mähtischs 2 der Mäheinrichtung 4 zugeführt und von Mähmessern abgeschnitten. Das Erntegut wird dann über eine Einzugschnecke 5 und einen Schrägförderer 6 zum Eingang einer Drescheinrichtung 11 des Dresch-/Separator-Systems 10 geführt. Am Eingang der Drescheinrichtung 10 befinden sich eine Einlegetrommel 16 und in Gutflussrichtung R nachgeordnet zumindest eine Dreschtrommel 12 mit einer quer zur Gutflussrichtung R, d. h. quer zur Mähdrescherlängsachse liegenden Rotationsachse 20.

Unterhalb der Dreschtrommel 12 befindet sich ein passend geformter Dreschkorb 13. Ein solcher Dreschkorb 13 besteht üblicherweise aus zahlreichen mit Abstand zueinander angeordneten, in Umlaufrichtung der Dreschtrommel 12 halbkreisförmig gebogenen Rippen, die über zahlreiche parallel und quer verlaufende Stege verbunden sind.

Die Dreschtrommel 12 ist an ihrem äußeren Radius mit sogenannten Dreschleisten bestückt (nicht dargestellt). Das vom Schrägförderer 6 kommende Erntegut wird durch die Einlegetrommel 16 erfasst und dann weiter von der Dreschtrommel 12 durch den zwischen der Dreschtrommel 12 und dem Dreschkorb 13 befindlichen Dreschspalt gefördert. Dabei wird durch die Dreschleisten das Erntegut gedroschen, d. h. geschlagen und zerrieben, wobei ein Korn-Spreu-Gemisch durch den Dreschkorb 13 nach unten fällt, welches einer Reinigungseinrichtung 17 zugeführt wird, um die Körner von den Beimengungen, d. h. von Halmteilen und Spreuteilen, zu trennen.

Von dem in Richtung R des Gutstroms G am hinteren Ende der Drescheinrichtung 11 befindlichen Gutstromausgang wird der gedroschene Gutstrom G über eine Wendetrommel 14 auf den Hordenschüttler 15 geleitet, auf dem die noch im Gutstrom G befindlichen Körner sowie evtl. Kurzstroh und Spreu abgetrennt werden. Die Körner, das Kurzstroh und die Spreu gelangen dann ebenfalls in die Reinigungseinrichtung 17, in welcher die Körner vom Kurzstroh und Spreu getrennt werden. Die Körner werden dann über einen Elevator 18 nach oben in einen Korntank 19 des Mähdreschers 1 gefördert und können dort bei Bedarf mit einem Tankentleerförderer 25 auf einen Transportwagen umgeladen werden. Das Stroh sowie ein kleiner Anteil an Verlustkörnern wandert über den Hordenschüttler 15 zum hinteren Ende des Mähdreschers 1 und wird dort ausgeworfen.

Erfindungsgemäß weist der Mähdrescher 1 eine Sensoreinrichtung 26 und eine Steuereinrichtung 30 auf, um den Auftreffpunkt A des Gutstroms G auf der Trenneinrichtung 15 genau zu steuern und somit einen optimalen Auftreffpunkt A, vorzugsweise möglichst weit am frontseitigen Ende des Hordenschüttlers 15, einzustellen, so dass die vom Schüttler 15 zur Verfügung gestellte Separationsfläche möglichst effektiv genutzt wird und der Anteil der Verlustkörner so gering wie möglich ist.

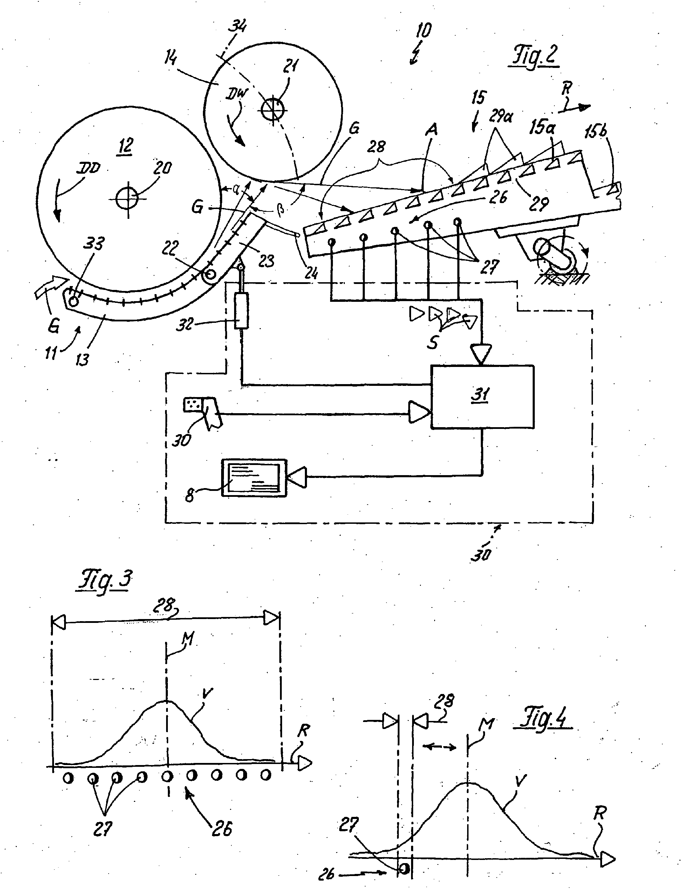

Zur genauen Erläuterung der Sensoreinrichtung 26 und der Steuereinrichtung 30 wird auf Figur 2 verwiesen. In dieser Figur ist der Einfachheit halber die Einlegetrommel nicht mit dargestellt.

Bei dem in Figur 2 dargestellten Ausführungsbeispiel weist der Dreschkorb 13 an seinem in Fahrtrichtung, d. h. in Gutstromrichtung R hinteren Ende ein Dreschkorbsegment 23 auf, welches um eine Schwenkachse 22 drehbar an dem Hauptteil des Dreschkorbs 13 befestigt ist. Dieses um die Drehachse 22 schwenkbare Dreschkorbsegment 23 ist mit einer Dreschkorbsegment-Stelleinrichtung 32, beispielsweise einem Hydraulikzylinder oder einem Stellmotor, gekoppelt, mit dem die Winkelstellung des Dreschkorbsegments 23 eingestellt werden kann.

Der Dreschkorb 13 ist hier an einer Schwenkachse 33 am vorderen Ende des Dreschkorbs 13 verstellbar im Mähdrescher 1 gelagert, so dass eine Gesamtverstellung des Dreschspalts zwischen Dreschtrommel 12 und Dreschkorb 13 möglich ist, um den Dreschspalt auf die zu erntende Fruchtart und die Erntebedingungen optimal einzustellen. Die Verstellung des hinteren Dreschkorbsegments 23 beeinflusst diese Gesamtverstellung nicht. Bei einer Verstellung des Dreschkorbspalts muss jedoch das hintere Dreschkorbsegment 23 nachgeregelt werden.

Wie aus Figur 2 gut ersichtlich ist, wird das Dreschgut G von der sich in der Rotationsrichtung DD um die Rotationsachse 20 drehende Dreschtrommel 12 durch den Spalt zwischen der Dreschtrommel 12 und dem Dreschkorb 13 hindurchgefördert und endseitig in Richtung der Wendetrommel 14 ausgeworfen. Die Wendetrommel 14 rotiert in eine Rotationsrichtung DW, welche mit der Rotationsrichtung DD der Dreschtrommel 12 übereinstimmt, um eine Wendetrommelachse 21, die parallel zur Dreschtrommelachse 20 verläuft. Der auf die Wendetrommel 14 auftreffende Gutstrom wird dadurch in Richtung des Hordenschüttlers 15 umgelenkt und trifft dort am Auftreffpunkt A auf. Der Abgabewinkel α, unter welchem das Dreschgut G vom Ausgang der Drescheinrichtung 11 zur Wendetrommel 14 übergeben wird, wird dabei wesentlich von der Winkelstellung des endseitigen Dreschkorbsegments 23 bestimmt. Dadurch wird automatisch auch der Reflexionswinkel β von der Wendetrommel 14 zum Schüttler und somit der Auftreffort A des Gutstroms G auf dem Hordenschüttler 15 bestimmt. Die Dreschkorbsegment-Stelleinrichtung 32 ist über einen Prozessor 31 der Steuereinrichtung 30 ansteuerbar, so dass folglich mit Hilfe der Steuereinrichtung 30 genau der Auftreffpunkt A des Gutstroms G auf dem Hordenschüttler 15 eingestellt werden kann.

Um zu vermeiden, dass Strohteile zwischen das hintere Ende des Dreschkorbs 13 und das vordere Ende des Hordenschüttlers 15 geraten, befindet sich hier eine rechenartige Abdeckung 24, welche entweder am vorderen Ende des Hordenschüttlers 15 oder am hinteren Ende des beweglichen Dreschkorbsegments 23 des Dreschkorbs 13 gelagert ist. Alternativ könnte anstelle des Rechens auch ein durchgehendes Blech verwendet werden, welches selber keine Abscheidewirkung hat.

Der Hordenschüttler 15 selbst besteht aus mehreren Schüttlerstufen 15a, 15b, 15c, welche jeweils Siebböden 29 mit darauf angeordneten, sich in Längsrichtung nach hinten erstreckenden Reitern 29a aufweisen. Durch Schüttelbewegung des Hordenschüttlers 15 wird das Stroh über die Reiter 29a und Siebböden 29 nach hinten befördert, wobei nach und nach die Körner gemeinsam mit kurzen Strohteilen und der Spreu durch die Siebböden 29 nach unten fallen.

Wie in Figur 2 dargestellt, befindet sich im vorderen Bereich in einem sehr kurzen Abstand hinter dem frontseitigen Ende des Hordenschüttlers 15 eine Sensoreinrichtung 26. Die Sensoreinrichtung 26 besteht aus mehreren Körperschallsensoren mit sich im Wesentlichen über die gesamte Breite des Hordenschüttlers 15 quer zur Gutstromrichtung R erstreckenden Sensorröhrchen 27. Diese Körperschallsensoren arbeiten in der Weise, dass der Körperschall, der von den auf den Sensorröhrchen 27 auftreffenden Körnern erzeugt wird, erfasst und in geeignete Signale umgewandelt wird. Die Stärke des Signals ist hierbei ein Maß für die Menge der auftreffenden Körner und somit für die Dichte des oberhalb des jeweiligen Sensorröhrchens 27 auftreffenden Gutstroms G. Dabei wird über die Breite des Hordenschüttlers 15 ein integrales Signal empfangen.

In dem in Figur 2 dargestellten Ausführungsbeispiel sind mehrere solcher Sensorröhrchen 27 parallel zueinander in Gutstromrichtung R hintereinander angeordnet, um ein in Gutstromrichtung R breiteres Messfeld 28 zu überwachen. Die Signale S der einzelnen Körperschallsensoren werden über eine Signalleitung zum Prozessor 31 der Steuereinrichtung 30 geführt und dort ausgewertet. Dieser zentrale Prozessor 31 der Steuereinrichtung 30 steuert auch die Dreschkorbsegment-Stelleinrichtung 32 an.

Wie aus Figur 3 ersichtlich ist, kann mit Hilfe einer solchen Sensoreinrichtung nicht nur die Lage des Maximums des auftreffenden Gutstroms im Messfeldbereich 28 genau lokalisiert werden, sondern es kann auch die Auftreffpunkt-Verteilung V des Gutstroms G in Gutstromrichtung R bestimmt werden.

Von dem Prozessor 31 können diese Daten dann auf einem Display 8 der Steuereinrichtung 30, welches sich beispielsweise in der Fahrerkabine 7 des Mähdreschers befindet, dem Fahrer genau angezeigt werden. Damit kann der Fahrer jederzeit genau sehen, an welcher Stelle der Gutstrom G gerade auf dem Hordenschüttler 15 auftrifft. Er kann dann manuell mittels einer Bedieneinrichtung 9, welche sich ebenfalls innerhalb der Fahrerkabine 7 befindet, ein entsprechendes Signal an den Prozessor 31 senden, um die Winkelstellung des ausgangsseitigen Korbsegments 23 des Dreschkorbs 13 zu verändern und damit den Auftreffpunkt A des Gutstroms G auf dem Hordenschüttler 15 in der gewünschten Weise zu verstellen.

Alternativ können der Steuereinrichtung 30 auch bestimmte Soll-Werte bereits vorgegeben sein, so dass diese automatisch in Abhängigkeit von dem empfangenen Signal S der Sensoreinrichtung 26 die optimale Einstellung des Auftreffpunkts A vornimmt. Dabei kann die aktuelle Einstellung ebenfalls am Display 8 angezeigt werden, so dass der Fahrer die Einstellung kontrollieren kann. Eine solche automatische Steuerung hat den Vorteil, dass in den Fällen, in denen sich der Auftreffpunkt A beispielsweise aufgrund veränderter Erntebedingungen, aufgrund Veränderungen der Rotationsgeschwindigkeit der Dreschtrommel etc. ändern würde, eine vollautomatische Nachregelung des beweglichen Dreschkorbsegments 23 in Richtung des optimalen Auftreffpunkts A erfolgen kann und somit der Fahrer von dieser Aufgabe entlastet ist. Über die Bedieneinrichtung 9 kann er beispielsweise den optimalen Auftreffpunkt, d. h. den Soll-Auftreffpunkt, für die Regelung durch den Prozessor 31 vorgeben.

Sofern im Vorhinein feststeht, dass der optimale Auftreffpunkt A auf dem Hordenschüttler 15 immer an der gleichen Position liegt, beispielsweise in einem genau definierten Abstand vom vorderseitigen Ende des Hordenschüttlers 15, kann eine einfache Sensoreinrichtung auch mit Hilfe eines Körperschallsensors mit nur einem Sensorstäbchen 27 realisiert werden. Dieses Sensorstäbchen 27 sollte dann an dem gewünschten Soll-Auftreffpunkt A installiert sein. Wie bereits erläutert, ist das von dem Körperschallsensor empfangene Signal abhängig von der Anzahl der auf dem Sensorstäbchen 27 auftreffenden Körner und somit von der Dichte des auf dem Hordenschüttler 15 auftreffenden Gutstroms G.

Wie Figur 4 zeigt, kann durch eine Variation des Ist-Auftreffpunkts nach vorne oder hinten und durch Beobachtung der dabei auftretenden Signalveränderung festgestellt werden, ob sich das Maximum M der Auftreffpunkt-Verteilung V des Gutstroms G vor oder hinter dem Ort des Sensors 27 befindet. Es kann dann eine Verstellung des beweglichen Dreschkorbsegments 23 in die passende Richtung erfolgen, bis sich schließlich der Maximalwert M der Verteilung V genau über dem Sensor 27, d. h. am gewünschten Auftreffpunkt, befindet. Das heißt, die Steuerung des beweglichen Korbsegments 23 erfolgt solange in einer bestimmten Richtung, bis ein Extremwert des Signals S der Sensoreinrichtung 26, im vorliegenden Fall das maximale Sensorsignal S, erreicht ist. Alternativ ist es auch möglich, den Auftreffpunkt so zu regeln, dass beispielsweise ein bestimmter Prozentsatz des Maximums erreicht ist, um so einen beliebigen anderen Auftreffpunkt neben der Position des Sensors 27 anzufahren. Allerdings müssten hierzu Informationen über die genaue Form der Auftreffpunkt-Verteilung V des Gutstroms G vorliegen.

Auch bei dem letzten Ausführungsbeispiel mit nur einem lokal angeordneten Sensor 27 kann die Einstellung des Auftrefforts vollautomatisch oder nach entsprechender Anzeige des Sensorsignals - beispielsweise in Form eines Zeigers auf dem Display 8 oder durch eine akustische Ausgabe - manuell durch den Fahrer erfolgen.

Die Erfindung bietet insgesamt eine sehr einfache und kostengünstige Möglichkeit, unabhängig von den weiteren Parametern in der Maschine den Auftreffpunkt A des Erntegutstroms G auf dem Schüttler 15 optimal einzustellen und somit den Anteil der Verlustkörner zu minimieren.

Es wird abschließend noch einmal darauf hingewiesen, dass es sich bei dem in den Figuren dargestellten Mähdrescher bzw. der Dresch-/Separator-Einrichtung und den im Zusammenhang damit erläuterten Verfahren lediglich um Ausführungsbeispiele handelt, welche vom Fachmann in vielfacher Hinsicht variiert werden können, ohne den Rahmen der Erfindung zu verlassen. So können beispielsweise anstelle der Körperschallsensoren auch andere Sensoren, beispielsweise Lichtschranken, verwendet werden. Ebenso kann, wie bereits eingangs beschrieben, eine Verstellung des Auftreffpunkts A des Gutstroms G auf dem Hordenschüttler 15 auch erfolgen, indem die Position der Wendetrommel 14 variiert wird. Dies sollte jedoch so erfolgen, dass der Achsabstand zwischen der Dreschtrommel 12 und der Wendetrommel 14 gleich bleibt, d. h. die Verstellung der Wendetrommelposition sollte auf dem in Figur 2 eingezeichneten Teilkreis 34 erfolgen. Eine weitere Eingriffsmöglichkeit zur Verstellung des Auftreffpunkts A besteht in der Variation der Rotationsgeschwindigkeit der Wendetrommel 14.

### Bezugszeichenliste

- 1: Mähdrescher
- 2: Mähtisch
- 3: Haspel
- 4: Mäheinrichtung
- 5: Einzugschnecke
- 6: Schrägförderer
- 7: Fahrerkabine
- 8: Display
- 9: Bedieneinrichtung
- 10: Dresch-/Separator-System
- 11: Drescheinrichtung
- 12: Dreschtrommel
- 13: Dreschkorb
- 14: Wendetrommel
- 15: Trenneinrichtung (Schüttler)
- 15a: Schüttlerfallstufe
- 15b: Schüttlerfallstufe
- 15c: Schüttlerfallstufe
- 16: Einlegetrommel
- 17: Reinigungseinrichtung
- 18: Elevator
- 19: Korntank
- 20: Dreschtrommelachse
- 21: Wendetrommelachse
- 22: Schwenkachse
- 23: Dreschkorbsegment
- 24: Abdeckung
- 25: Tankentleerrohr
- 26: Sensoreinrichtung
- 27: Sensorröhrchen
- 28: Messfeld
- 29: Siebbleche
- 30: Steuereinrichtung
- 31: Prozessor
- 32: Dreschkorbsegment-Stelleinrichtung
- 33: Schwenkachse
- 34: Teilkreis

- A: Auftreffpunkt
- G: Gutstrom
- R: Gutstromrichtung
- S: Signal
- DD: Rotationsrichtung
- DW: Rotationsrichtung
- M: Maximum
- V: Auftreffpunktverteilung

- α: Abgabewinkel
- β: Reflektionswinkel

## Patentansprüche

1. Dresch-/Separator-System (10)
mit einer Drescheinrichtung (11) zum Dreschen eines aus zu entkörnendem Getreide bestehenden Gutstroms (G), mit einer der Drescheinrichtung (11) nachgeordneten Trenneinrichtung (15) zum Separieren von noch im gedroschenen Gutstrom (G) enthaltenen Körnern von weiteren Bestandteilen des gedroschenen Gutstroms (G) und mit einer Wendetrommel (14), welche den von der Drescheinrichtung (11) kommende Gutstrom (G) auf die Trenneinrichtung (15) umlenkt,
**gekennzeichnet durch**
eine Sensoreinrichtung (26) zur Detektion eines Auftreffpunkts (A) des Gutstroms (G) auf der Trenneinrichtung (15)
und eine Steuereinrichtung (30) zur Steuerung des Auftreffpunkts (A) des Gutstroms (G) auf der Trenneinrichtung (15).

2. Dresch-/Separator-System nach Anspruch 1,
**dadurch gekennzeichnet, dass**
die Drescheinrichtung (11) eine quer zu einer Gutstromrichtung (R) angeordnete Dreschtrommel (12) und einen Dreschkorb (13) aufweist, mit einem an einem Gutstromausgang der Drescheinrichtung (11) beweglich gelagerten Dreschkorbsegment (23), und dass die Steuereinrichtung (30) eine mit dem beweglichen Dreschkorbsegment (23) gekoppelte Dreschkorbsegment-Stelleinrichtung (32) aufweist.

3. Dresch-/Separator-System nach Anspruch 1 oder 2,
**dadurch gekennzeichnet, dass**
die Wendetrommel (14) eine in ihrer Position verstellbare Rotationsachse (21) aufweist und dass die Steuereinrichtung (30) eine Wendetrommel-Stelleinrichtung zur Verstellung der Position der Wendetrommelachse (14) aufweist.

4. Dresch-/Separator-System nach Anspruch 3,
**dadurch gekennzeichnet, dass**
die Achse (21) der Wendetrommel (14) auf einer Teil-Kreisbahn (34) in einem festen Abstand um eine parallel zur Wendetrommelachse (21) liegende Dreschtrommelachse (20) der Drescheinrichtung (11) verstellbar gelagert ist.

5. Dresch-/Separator-System nach einem der Ansprüche 1 bis 4,
**dadurch gekennzeichnet, dass**
die Steuereinrichtung (30) zur Steuerung der Rotationsgeschwindigkeit der Wendetrommel (14) mit einem Antrieb der Wendetrommel (14) verbunden ist.

6. Dresch-/Separator-System nach einem der Ansprüche 1 bis 5,
**dadurch gekennzeichnet, dass**
die Steuereinrichtung (30) so ausgebildet ist, dass sie den Auftreffpunkt (A) automatisch in Abhängigkeit von einem gemessenen Sensorsignal (S) der Sensoreinrichtung (26) einstellt.

7. Dresch-/Separator-System nach einem der Ansprüche 1 bis 6,
**dadurch gekennzeichnet, dass** die
Sensoreinrichtung (26) ein Signal erzeugt, welches von einer Dichte eines an einem bestimmten Auftreffpunkt (A) auftretenden Gutstroms (G) abhängt.

8. Dresch-/Separator-System nach einem der Ansprüche 1 bis 7,
**dadurch gekennzeichnet, dass**
die Sensoreinrichtung (26) einen in Gutstromrichtung (R) breiten Messbereich (28) aufweist und derart aufgebaut ist, dass der Auftreffpunkt (A) innerhalb des Messbereichs (28) lokalisiert wird.

9. Dresch-/Separator-System nach einem der Ansprüche 1 bis 8,
**dadurch gekennzeichnet, dass**
die Sensoreinrichtung (26) einen akustischen Sensor (27) umfasst.

10. Dresch-/Separator-System nach einem der Ansprüche 1 bis 9,
**dadurch gekennzeichnet, dass**
die Sensoreinrichtung einen optischen Sensor umfasst.

11. Mähdrescher (1) mit einem Dresch-/Separator-System (10) nach einem der Ansprüche 1 bis 10.

12. Verfahren zur Steuerung eines Dresch-/Separator-Systems (10), in welchem ein aus zu entkörnendem Getreide bestehender Gutstrom (G) zunächst in einer Drescheinrichtung (11) bearbeitet wird und dann mittels einer Wendetrommel (14) auf eine der Drescheinrichtung (11) nachgeordnete Trenneinrichtung (15) umlenkt wird, welche noch im vorentkörntem Gutstrom (G) enthaltene Körner von weiteren Bestandteilen des Gutstroms (G) separiert,
**dadurch gekennzeichnet, dass**
mittels einer Sensoreinrichtung (26) ein Auftreffpunkt (A) des Gutstroms (G) auf der Trenneinrichtung (15) detektiert wird
und in Abhängigkeit eines von der Sensoreinrichtung (26) erzeugten Signals (S) der Auftreffpunkt (A) des Gutstroms (G) auf der Trenneinrichtung (15) verstellt wird.

13. Verfahren nach Anspruch 12,
**dadurch gekennzeichnet, dass**
zur Steuerung des Auftreffpunkts (A) eine Position eines an einem Gutstromausgang der Drescheinrichtung (11) beweglich angeordneten Dreschkorbsegments (23) verstellt wird.

14. Verfahren nach Anspruch 12 oder 13,
**dadurch gekennzeichnet, dass**
zur Steuerung des Auftreffpunkts (A) die Position einer Rotationsachse (21) der Wendetrommel (14) verstellt wird.

15. Verfahren nach einem der Ansprüche 12 bis 14,
**dadurch gekennzeichnet, dass**
zur Steuerung des Auftreffpunkts (A) die Rotationsgeschwindigkeit der Wendetrommel (14) gesteuert wird.

16. Verfahren nach einem der Ansprüche 12 bis 15,
**dadurch gekennzeichnet, dass**
mittels der Sensoreinrichtung (26) ein in einer Gutstromrichtung (R) breites Messfeld (28) überwacht wird und dabei der Auftreffpunkt (A) innerhalb des Messfelds (28) lokalisiert wird.

17. Verfahren nach einem der Ansprüche 12 bis 16,
**dadurch gekennzeichnet, dass**
mit der Sensoreinrichtung (26) ein Signal (S) eines an einem bestimmten Auftreffpunkt (A) auftreffenden Gutstroms (G) detektiert wird und die Einstellung eines bestimmten Auftreffpunkts (A) erfolgt, indem der Auftreffpunkt (A) so lange variiert wird, bis das detektierte Signal (S) einem gewünschten Wert entspricht.

18. Verfahren nach einem der Ansprüche 12 bis 17,
**dadurch gekennzeichnet, dass**
der Auftreffpunkt (A) des Gutstroms (G) auf der Trenneinrichtung (15) in Abhängigkeit von einem Signal (S) der Sensoreinrichtung (26) vollautomatisch auf eine vorgegebene Sollposition eingestellt wird.

## Claims

1. A threshing/separator system (10)
comprising a threshing device (11) for threshing a flow of material (G) comprising cereal to be shelled, a separating device (15) arranged downstream of the threshing device (11) for separating grains still contained in the threshed flow of material (G) from further constituents of the threshed flow of material (G) and a turning drum (14) which deflects the flow of material (G) coming from the threshing device (11) on to the separating device (15),
**characterised by**
a sensor device (26) for detection of an impingement point (A) of the flow of material (G) on the separating device (15), and
a control device (30) for controlling the impingement point (A) of the flow of material (G) on the separating device (15).

2. A threshing/separator system according to claim 1 **characterised in that** the threshing device (11) has a threshing drum (12) arranged transversely to a material flow direction (R) and a threshing concave (13), with a threshing concave segment (23) supported movably at a material flow outlet of the threshing device (11), and the control device (30) has a threshing concave segment adjusting device (32) coupled to the movable threshing concave segment (23).

3. A threshing/separator system according to claim 1 or claim 2 **characterised in that** the turning drum (14) has an axis of rotation (21) which is displaceable in position and that the control device (30) has a turning drum adjusting device for adjusting the position of the turning drum axis (14).

4. A threshing/separator system according to claim 3 **characterised in that** the axis (21) of the turning drum (14) is mounted displaceably on a part-circular path (24) at a fixed spacing about a threshing drum axis (20) of the threshing device (11), the threshing drum axis being parallel to the turning drum axis (21).

5. A threshing/separator system according to one of claims 1 to 4 **characterised in that** the control device (30) for controlling the speed of rotation of the turning drum (14) is connected to a drive of the turning drum (14).

6. A threshing/separator system according to one of claims 1 to 5 **characterised in that** the control device (30) is so adapted that it adjusts the impingement point (A) automatically in dependence on a measured sensor signal (S) from the sensor device (26).

7. A threshing/separator system according to one of claims 1 to 6 **characterised in that** the sensor device (26) produces a signal dependent on a density of a material flow (G) occurring at a given impingement point (A).

8. A threshing/separator system according to one of claims 1 to 7 **characterised in that** the sensor device (26) has a measurement region (28) which is wide in the material flow direction (R) and the sensor device is so designed that the impingement point (A) is located within the measurement region (28).

9. A threshing/separator system according to one of claims 1 to 8 **characterised in that** the sensor device includes an acoustic sensor (27).

10. A threshing/separator system according to one of claims 1 to 9 **characterised in that** the sensor device includes an optical sensor.

11. A combine harvester (1) comprising a threshing/separator system (10) according to one of claims 1 to 10.

12. A method of controlling a threshing/separator system (10) in which a flow of material (G) comprising cereal to be shelled is firstly processed in a threshing device (11) and is then deflected by means of a turning drum (14) on to a separating device (15) which is arranged downstream of the threshing device (11) and which separates grains still contained in the pre-shelled flow of material (G) from further constituents of the flow of material (G),
**characterised in that**
an impingement point (A) of the flow of material (G) on the separating device (15) is detected by means of a sensor device (26)
and the impingement point (A) of the flow of material (G) on the separating device (15) is adjusted in dependence on a signal (S) produced by the sensor device (26).

13. A method according to claim 12 **characterised in that** a position of a threshing concave segment (23) arranged movably at a material flow outlet of the threshing device (11) is displaced for control of the impingement point (A).

14. A method according to claim 12 or claim 13 **characterised in that** the position of an axis of rotation (21) of the turning drum (14) is displaced for control of the impingement point (A).

15. A method according to one of claims 12 to 14 **characterised in that** the speed of rotation of the turning drum (14) is controlled for control of the impingement point (A).

16. A method according to one of claims 12 to 15 **characterised in that** a measurement area (28) which is wide in a material flow direction (R) is monitored by means of the sensor device (26) and **in that** case the impingement point (A) is located within the measurement area (28).

17. A method according to one of claims 12 to 16 **characterised in that** a signal (S) of a flow of material (G) impinging at a given impingement point (A) is detected with the sensor device (26) and adjustment of a given impingement point (A) is effected by the impingement point (A) being varied until the detected signal (S) corresponds to a desired value.

18. A method according to one of claims 12 to 17 **characterised in that** the impingement point (A) of the flow of material (G) on the separating device (15) is fully automatically adjusted to a predetermined reference position in dependence on a signal (S) from the sensor device (26).

## Revendications

1. Système batteur-séparateur (10),
comprenant un dispositif de battage (11) destiné à battre un flux de récolte (G) constitué de céréales à égrener, comprenant un dispositif séparateur (15) qui est placé à la suite du dispositif de battage (11) et est destiné à séparer les grains, encore contenus dans le flux de récolte (G) battu, des autres constituants du flux de récolte (G) battu, et comprenant un tambour de déviation (14) qui dévie sur le dispositif séparateur (15) le flux de récolte (G) provenant du dispositif de battage (11),
**caractérisé par le fait qu'il comporte**
un dispositif capteur (26) pour détecter un point d'impact (A) du flux de récolte (G) sur le dispositif séparateur (15), et
un dispositif de commande (30) pour commander le point d'impact (A) du flux de récolte (G) sur le dispositif séparateur (15).

2. Système batteur-séparateur selon la revendication 1,
**caractérisé par le fait que**
le dispositif de battage (11) présente un batteur (12), placé transversalement à un sens de flux de récolte (R), et un contre-batteur (13) avec un segment de contre-batteur (23) monté mobile à la sortie du flux de récolte du dispositif de battage (11), et **par le fait que** le dispositif de commande (30) présente un dispositif (32) de manoeuvre de segment de contre-batteur, qui est couplé au segment de contre-batteur (23) mobile.

3. Système batteur-séparateur selon la revendication 1 ou 2,
**caractérisé par le fait que**
le tambour de déviation (14) présente un axe de rotation (21) à position réglable, et **par le fait que** le dispositif de commande (30) comporte un dispositif de manoeuvre de tambour de déviation, destiné à modifier la position de l'axe de tambour de déviation (14).

4. Système batteur-séparateur selon la revendication 3,
**caractérisé par le fait que**
l'axe (21) du tambour de déviation (14) est disposé de manière à pouvoir être déplacé à une distance fixe sur une trajectoire circulaire partielle (34) autour d'un axe de batteur (20) du dispositif de battage (11) qui est parallèle à l'axe du tambour de déviation (14).

5. Système batteur-séparateur selon une des revendications 1 à 4,
**caractérisé par le fait que**
pour contrôler la vitesse de rotation du tambour de déviation (14), le dispositif de commande (30) est connecté à un moyen d'entraînement du tambour de déviation (14).

6. Système batteur-séparateur selon une des revendications 1 à 5,
**caractérisé par le fait que**
le dispositif de commande (30) est conçu de manière à régler automatiquement le point d'impact (A) en fonction d'un signal de capteur (S) mesuré du dispositif capteur (26)

7. Système batteur-séparateur selon une des revendications 1 à 6,
**caractérisé par le fait que**
le dispositif capteur (26) produit un signal qui est fonction d'une densité d'un flux de récolte (G) arrivant sur un point d'impact (A) précis.

8. Système batteur-séparateur selon une des revendications 1 à 7
**caractérisé par le fait que**
le dispositif capteur (26) présente une large zone de mesure (28) dans le sens du flux de récolte (R) et est conçu de manière à ce que le point d'impact (A) soit placé à l'intérieur de la zone de mesure (28).

9. Système batteur-séparateur selon une des revendications 1 à 8,
**caractérisé par le fait que**
le dispositif capteur (26) comprend un capteur acoustique (27).

10. Système batteur-séparateur selon une des revendications 1 à 9,
**caractérisé par le fait que**
le dispositif capteur comprend un capteur optique.

11. Moissonneuse-batteuse (1) dotée d'un système batteur-séparateur (10) selon une des revendications 1 à 10.

12. Procédé de commande d'un système batteur-séparateur (10), selon lequel un flux de récolte (G), constitué de céréales à égrener, est d'abord traité dans un dispositif de battage (11) et est ensuite dévié au moyen d'un tambour de déviation (14) sur un dispositif séparateur (15) qui est placé en aval du dispositif de battage (11) et sépare les grains encore contenus dans le flux de récolte (G) préégrené, des autres constituants du flux de récolte (G),
**caractérisé par le fait que**
l'on détecte, à l'aide d'un dispositif capteur (26), un point d'impact (A) du flux de récolte (G) sur le dispositif séparateur (15), et
on déplace le point d'impact (A) du flux de récolte (G) sur le dispositif séparateur (15), en fonction d'un signal (S) produit par le dispositif capteur (26).

13. Procédé selon la revendication 12,
**caractérisé par le fait que**
pour commander le point d'impact (A), on modifie une position d'un segment de contre-batteur (23) monté mobile à une sortie de flux de récolte du dispositif de battage (11).

14. Procédé selon la revendication 12 ou 13,
**caractérisé par le fait que**
pour commander le point d'impact (A), on modifie la position d'un axe de rotation (21) du tambour de déviation (14).

15. Procédé selon une des revendications 12 à 14,
**caractérisé par le fait que**
pour commander le point d'impact (A), on contrôle la vitesse de rotation du tambour de déviation (14).

16. Procédé selon une des revendications 12 à 15,
**caractérisé par le fait que**
l'on surveille, au moyen du dispositif capteur (26), une zone de mesure (28) qui est large dans un sens de flux de récolte (R), et on place en même temps le point d'impact (A) à l'intérieur de cette zone de mesure (28).

17. Procédé selon une des revendications 12 à 16,
**caractérisé par le fait que**
l'on détecte avec le dispositif capteur (26) un signal (S) d'un flux de récolte (G) arrivant sur un point d'impact (A) précis, et on effectue le réglage d'un point d'impact (A) défini en modifiant le point d'impact (A) jusqu'à ce que le signal (S) détecté corresponde à une valeur désirée.

18. Procédé selon une des revendications 12 à 17,
**caractérisé par le fait que**
le point d'impact (A) du flux de récolte (G) sur le dispositif séparateur (15) est réglé de manière entièrement automatique sur une position de consigne prédéterminée, en fonction d'un signal (S) du dispositif capteur (26).
